Europäisches Patentamt

European Patent Office

Office européen des brevets

(19)

(11) Publication number: **0 452 488 B1**

(12) **EUROPEAN PATENT SPECIFICATION**

(45) Date of publication of patent specification: **07.12.94**  (51) Int. Cl.⁵: **C08L 15/00**, C08L 9/02, C08K 5/09, B29D 29/00

(21) Application number: **89906448.9**

(22) Date of filing: **02.06.89**

(86) International application number:
**PCT/JP89/00557**

(87) International publication number:
**WO 89/12076 (14.12.89 89/29)**

(54) **FRICTION DRIVE BELT.**

(30) Priority: **03.06.88 JP 136807/88**

(43) Date of publication of application:
**23.10.91 Bulletin 91/43**

(45) Publication of the grant of the patent:
**07.12.94 Bulletin 94/49**

(84) Designated Contracting States:
**DE GB IT**

(56) References cited:
**EP-A- 0 248 271**   **EP-A- 0 319 320**
**DE-A- 3 311 217**   **JP-A-58 118 371**
**JP-A-58 201 830**   **JP-B- 5 545 086**
**US-A- 4 191 671**

(73) Proprietor: **NIPPON ZEON CO., LTD.**
**6-1, Marunouchi 2-chome**
**Chiyoda-ku Tokyo 100 (JP)**

(72) Inventor: **OYAMA, Motofumi**
**5-27-6, Hailando**
**Yokosuka-shi Kanagawa 239 (JP)**
Inventor: **AIMURA, Yoshiaki**
**2-15-33, Isogo**
**Isogo-ku**
**Yokohama-shi Kanagawa 235 (JP)**
Inventor: **SAITO, Yoshiomi**
**1-13-1, Misora, Yotsukaido-shi**
**Chiba 283 (JP)**

(74) Representative: **Myerscough, Philip Boyd et al**
**J.A.KEMP & CO.**
**14, South Square**
**Gray's Inn**
**London WC1R 5LX (GB)**

**Description**

Field of Industrial Utilization

This invention relates to a friction conduction belt. More specifically, it relates to a friction conduction belt having oil resistance, heat resistance, cold resistance and mechanical strength properties and excellent flexural resistance.

Prior Art

The frictional conduction belt is a belt which transmits motion by friction, and includes V belts such as a bonded V belt, a low edge V belt and a V-ribbed belt and various types of flat belt. These belts are composed generally of a core wire supporting an applied stress, rubber withstanding compression and stretching, and as required, an outer covering fabric protecting part or the whole of the outside surface of the belt.

Various V-belts made of chloroprene rubber have been used as friction conduction belts for automobiles in driving auxiliary machines of internal combustion engines, such as cooling fans, alternators, water pumps, compressors and power steering pumps or in driving stepless speed changing mechanisms (CVG) for two-wheeled vehicles.

So far, improvements relating to these belts have been directed mainly to changes of the belt shape, for example as in a cogged V belt, or a V ribbed belt of reduced thickness combining a flat belt and a V belt. Such improvements, however, have been limited because conventional rubber materials have not proved to be entirely satisfactory in flexural resistance.

Furthermore, in recent years, reduced fuel costs or high outputs were achieved in automobiles, and the temperature within the engine room has become higher than before. Accordingly, the heat resistance of the conventional robber materials for belts has also given rise to a problem.

It is an object of this invention to provide a friction conduction belt having oil resistance, heat resistance, weather resistance, cold resistance and mechanical strength properties and excellent flexural strength.

JP-A-55 45086 discloses a rubber composition obtained by hot curing a mixture comprising diene rubber or ethylene/propylene rubber, an $\alpha$, $\beta$-ethylenically unsaturated carboxylic acid, a divalent metal compound, an organic peroxide and an aromatic secondary amine compound.

According to this invention, there are provided (1) a friction conduction belt composed of a vulcanizate of a rubber composition comprising a) 100 parts by weight of a nitrile group-containing highly saturated rubber having an iodine number of not more than 60 and having 10 to 60 weight % nitrile monomer units, and b) 3 to 80 parts by weight of zinc methacrylate and c) an organic peroxide, and (2) a friction conduction belt composed of a vulcanizate of a rubber composition prepared by adding a zinc compound and methacrylic acid to a nitrile group-containing highly saturated rubber, forming zinc methacrylate in the rubber, and then incorporating an organic peroxide.

One example of the nitrile group-containing highly saturated rubber used in this invention is rubber obtained by hydrogenating the conjugated diene units of a copolymer rubber composed of an ethylenically unsaturated nitrile such as acrylonitrile, methacrylonitrile or alpha-chloroacrylonitrile and a conjugated diene such as 1,3-butadiene, isoprene, 1,3-pentadiene or 2,3-dimethyl-1,3-butadiene. Another example is a copolymer rubber composed of the above ethylenically unsaturated nitrile, the conjugated diene, and at least one monomer copolymerizable with these, or rubber obtained by hydrogenating the conjugated diene units of the copolymer rubber. Examples of the copolymerizable monomer include ethylenically unsaturated carboxylic acid esters such as methyl (meth)acrylate, ethyl (meth)acrylate, propyl (meth)acrylate, butyl (meth)acrylate, methoxyethyl (meth)acrylate and ethoxyethyl (meth)acrylate; and cyano-substituted alkyl esters of (meth)acrylic acid such as cyanomethyl (meth)acrylate, 1- or 2-cyanoethyl (meth)acrylate, 1-cyanopropyl (meth)acrylate, 4-cyanobutyl (meth)acrylate, 6-cyanohexyl (meth)acrylate, 2-ethyl-6-cyanohexyl (meth)acrylate and 8-cyanooctyl (meth)acrylate.

The amount of the ethylenically unsaturated nitrile monomer units in the nitrile group-containing highly saturated rubber is 10 to 60 % by weight. If it is less than 10 % by weight, the oil resistance of the rubber is not sufficient. If it exceeds 60 % by weight, the elasticity of the rubber undesirably descreases.

The nitrile group-containing highly saturated has an iodine number of not more than 60. If its iodine number is more than 60, the flexural resistance of the rubber cannot be improved while maintaining its heat resistance, weather resistance, cold resistance and mechanical strengh properties at desirable levels. Preferably, the nitrile group-containing highly saturated rubber has an iodine number of not more than 45.

2

The organic peroxide used in this invention may be any of those which are usually employed in peroxide vulcanization of rubber. Examples include dicumyl peroxide, di-t-butyl peroxide, t-butylcumyl peroxide, benzoyl peroxide, 2,5-dimethyl-2,5-di(t-butylperoxy)hexyne-3, 2,5-dimethyl-2,5-di(benzoylperoxy)-hexane and 2,5-dimethyl-2,5-mono(t-butylperoxy)-hexane. At least one of these organic peroxides may be used in a total amount of usually 0.2 to 10 parts by weight per 100 parts by weight of the rubber. Its optimal amount may be determined according to the physical property required.

Usually, zinc methacrylate prepared in advance may be added to the rubber. At times, it may be prepared in situ by separately adding methacrylic acid and a zinc compound to the rubber during the preparation of the rubber composition and reacting them to produce zinc methacrylate in situ. Any zinc compound which can form a salt with methacrylic acid may be used, but zinc oxide, zinc hydroxide and zinc carbonate are preferred.

If the amount of zinc methacrylate used is less than 3 parts by weight, the effect of improving the flexural resistance of the rubber is low. If it exceeds 80 parts by weight, the permanent compression set of the rubber becomes high. The preferred amount is 3 to 60 parts by weight.

According to the use of the friction conduction belt, various chemicals used in the rubber industry may be incorporated together with the above components. Examples of the chemicals are reinforcing agents such as carbon black and silica, fillers such as calcium carbonate and talc, curing coagents such as triallyl isocyanurate and trimethylolpropane, sulfur, various vulcanization accelerators, plasticizers, stabilizers, processing aids and coloring agents. The rubber composition may be prepared by using an ordinary mixer such as a roll or a Banbury mixer.

The present invention can give a friction conduction belt having superior oil resistance, heat resistance, cold resistance and strength properties to the prior art and excellent flexural resistance.

Specific examples of the friction conduction belt of this invention are a low edge V belt, a cogged V belt and a V ribbed belt. They are useful as driving belts of auxiliary machines of automobile internal combustion engines such as cooling fans, water pumps, compressors and power steering pumps, driving belts for step-less speed changing mechanisms (CVG) for two-wheeled vehicles, driving belts for agricultural machinery such as combines, and also as driving belts of general industrial machinery.

Examples

The following examples specifically illutrate the present invention. All parts and percentages in the following examples are by weight unless otherwise specified.

Example 1

Emulsion-polymerized acrylonitrile/butadiene copolymer rubber (to be referred to as NBR) (E) and butadiene/butyl acrylate/acrylonitrile terpolymer rubber (H) indicated in Table 1 were dissolved in methyl isobutyl ketone, and hydrogenated by using a Pd-carbon catalyst to prepare hydrogenated NBRs(A to D) and hydrogenated acrylonitrile/butadiene/butyl acrylate terpolymer rubber (F and G) having the iodine numbers indicated in Table 1.

## Table 1

| Rubber designation | Hydrogenated NBR | | | | | Hydrogenated acrylonitrile butadiene/ butyl acrylate copolymer rubber | | |
|---|---|---|---|---|---|---|---|---|
| Composition | A | B | C | D | E | F | G | H |
| Bound acrylonitrile (wt.%) | 45 | 37 | 33 | 37 | 37 | 35 | 35 | 35 |
| Butyl acrylate unit portion (wt.%) | – | – | – | – | – | 60 | 35 | 35 |
| Iodine number | 25 | 2 | 45 | 70 | 280 | 23 | 25 | 138 |

By using these rubbers, rubber compound compositions were prepared in accordance with the compounding recipes shown in Table 2, and then press-cured under the vulcanizing conditions shown in Table 2 to-prepare vulcanized sheets having a thickness of 2 mm.

The properties of these vulcanized sheets were measured in accordance with JIS K-6301. The results are shown in Table 2.

As a reference example, the results obtained with an example of conventional chloroprene rubber are shown together.

4

Table 2

| Run No.<br>Compounding receipe | | Comparison | | | | | Invention | | | | | | | Reference |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Rubber No. | | D | E | H | H | H | A | B | C | F | G | C | C | I(*1) |
| Compounding rubber | | 100 | 100 | 100 | 100 | 100 | 100 | 100 | 100 | 100 | 100 | 100 | 100 | 100 |
| Zinc oxide | | 5 | 5 | 5 | 5 | 5 | 5 | 5 | 5 | 5 | 5 | 5 | 5 | 2 |
| FEF carbon black | | 30 | 30 | 30 | 30 | 30 | 30 | 30 | 30 | 30 | 30 | 30 | 30 | 60 |
| Zinc dimethacrylate | | 15 | 15 | 15 | 15 | 15 | 15 | 15 | 15 | 15 | 15 | 15 | 15 | – |
| PER HEXYNE 2.5 B-40 (*2) | | 2 | 2 | 2 | 2 | 6 | 6 | 6 | 6 | 6 | 6 | 6 | – | – |
| PEROXIMON F-40 (*3) | | – | – | – | – | – | – | – | – | – | – | – | 6 | – |
| Sulfur | | – | – | – | 0.5 | – | – | – | – | – | – | 0.5 | – | – |
| tetramethyl thiuram disulfide | | – | – | – | 1.5 | – | – | – | – | – | – | 1.5 | – | – |
| cyclohexylbenzothiazyl sulfenamide | | – | – | – | 0.5 | – | – | – | – | – | – | 0.5 | – | – |
| magnesium oxide | | – | – | – | – | – | – | – | – | – | – | – | – | 7 |
| Vulcanization conditions | Temperatures (°C) | 180 | | | | | 180 | | | | | | | 160 |
| | Time (minutes) | 30 | | | | | 30 | | | | | | | 30 |

(continued)

Table 2 (continued)

| Run No. | Comparison | | | | | Invention | | | | | | | Reference |
|---|---|---|---|---|---|---|---|---|---|---|---|---|---|
| | 1 | 2 | 3 | 4 | 5 | 6 | 7 | 8 | 9 | 10 | 11 | 12 | 13 |
| Rubber No. | D | E | H | H | H | A | B | C | F | G | C | C | I(*1) |
| **Tensile test** | | | | | | | | | | | | | |
| Tensile strength (kg/cm²) | 225 | 143 | 141 | 156 | 158 | 345 | 294 | 285 | 266 | 279 | 279 | 265 | 187 |
| Elongation (%) | 230 | 170 | 190 | 240 | 130 | 430 | 390 | 390 | 380 | 390 | 410 | 300 | 420 |
| Hardness (JIS) | 80 | 77 | 78 | 74 | 79 | 75 | 73 | 73 | 73 | 72 | 72 | 74 | 76 |
| **Air heat aging test** (150 °C, 10 days) | | | | | | | | | | | | | |
| Tensile strength (kg/cm²) | 130 | (*4) | 123 | 120 | (*4) | 210 | 225 | 221 | 181 | 193 | 203 | 234 | (*4) |
| Elongation (%) | 60 | | 70 | 70 | | 110 | 150 | 130 | 100 | 110 | 130 | 140 | |
| Hardness (JIS) | 88 | | 93 | 88 | | 82 | 80 | 81 | 80 | 82 | 80 | 81 | |
| **Flexural test** Number of crack occurrences | 12000 | 8000 | 9000 | 9000 | 5000 | 68000 | 90000 | 69000 | 54000 | 48000 | 76000 | 34000 | 15000 |

(*1): Neoprene GRT, a product of Du Pont
(*2): 1,3-bis(tert-butylperoxyisopropyl)benzene
(*3): 2,5-dimethyl-2,5-di(tert-butylperoxy)hexane
(*4): Measurement was impossible because cracking or breakage occurred by bending of the sample during measurement.

## Example 2

The rubbers in Example 1 were used, and rubber compound compositions were prepared in accordance with the compoundinng recipes of Table 3, and press-cured under the vulcanization conditions given

6

in Table 3. The properties of the vulcanizates were measured, and the results are shown in Table 3.

Example 3

The rubbers in Example 1 were used, and rubber compound compositions were prepared in accordance with the compoundinng recipes of Table 4, and press-cured under the vulcanization conditions given in Table 4. The properties of the vulcanizates were measured, and the results are shown in Table 4.

EP 0 452 488 B1

Table 3

| Run No. | | Comparison | | | | | | | Invention | | | | | |
|---|---|---|---|---|---|---|---|---|---|---|---|---|---|---|
| Compounding receipe: Properties of the vulcanizate | | 14 | 15 | 16 | 17 | 18 | 19 | 20 | 21 | 22 | 23 | 24 | 25 | 26 |
| Rubber E | | 100 | 100 | 100 | 100 | 100 | 100 | | 100 | 100 | 100 | 100 | 100 | 100 |
| Rubber B | | | | | | | | 100 | | | | | | |
| Zinc oxide | | 5 | 5 | 5 | 5 | 5 | 5 | 5 | 5 | 5 | 5 | 5 | 5 | 5 |
| FEF carbon black | | 60 | 45 | 30 | 15 | – | 30 | 60 | 45 | 30 | 15 | – | – | – |
| Zinc dimethacrylate | | – | 7.5 | 15 | 22.5 | 30 | 15 | – | 7.5 | 15 | 22.5 | 30 | 10 | 50 |
| PERHEXYNE 2.5 B-40 * | | 2 | 2 | 2 | 2 | 2 | 6 | 6 | 6 | 6 | 6 | 6 | 6 | 6 |
| Vulcanization conditions | Temperatures (°C) | 180 | | | | | | | 180 | | | | | |
| | Time (minutes) | 30 | | | | | | | 30 | | | | | |
| **Tensile test** | | | | | | | | | | | | | | |
| Tensile strength (kg/cm$^2$) | | 196 | 165 | 153 | 145 | 148 | 155 | 256 | 266 | 294 | 370 | 398 | 378 | 430 |
| Elongation (%) | | 330 | 260 | 170 | 160 | 170 | 100 | 260 | 330 | 390 | 470 | 440 | 480 | 470 |
| Hardness (JIS) | | 75 | 75 | 77 | 76 | 75 | 78 | 74 | 74 | 73 | 74 | 74 | 60 | 85 |

(continued)

Table 3 (continued)

| Run No. | Comparison | | | | | | Invention | | | | | | |
|---|---|---|---|---|---|---|---|---|---|---|---|---|---|
| Compounding receipe: Properties of the vulcanizate | 14 | 15 | 16 | 17 | 18 | 19 | 20 | 21 | 22 | 23 | 24 | 25 | 26 |
| <u>Air heat aging test</u><br>(150 °C, 10 days)<br>Tensile strength (kg/cm$^2$)<br>Elongation (%)<br>Hardness (JIS) | Measurement impossible (because of cracking or breakage by bending) | | | | | 230<br>90<br>84 | 196<br>110<br>82 | 225<br>150<br>80 | 211<br>130<br>83 | 208<br>110<br>81 | 211<br>130<br>70 | 268<br>140<br>91 | |
| <u>Flexural test</u><br>Number of crack occurrences | 5000 | 4000 | 8000 | 9000 | 6000 | 1000 | 16000 | 68000 | 90000 | 78000 | 81000 | * | 78000 |

\* no cracking after 10000 bendings

EP 0 452 488 B1

## Table 4

| Compounding receipe: Properties of the vulcanizate \ Run No. | Invention | | |
|---|---|---|---|
| | 27 | 28 | 29 |
| Rubber C | 100 | 100 | 100 |
| FEF carbon black | 30 | 30 | 30 |
| zinc dimethacrylate | 15 | – | – |
| zinc oxide | – | 15 | – |
| zinc carbonate | – | – | 30 |
| methacrylic acid | – | 24 | 24 |
| PERHEXYNE 2.5 B-40 (*2) | 6 | 6 | 6 |
| **Vulcanization conditions** | | | |
| Temperature (°C) | 180 | 180 | 180 |
| Time (minutes) | 30 | 30 | 30 |
| **Tensile test** | | | |
| Tensile strength $(kg/cm^2)$ | 284 | 473 | 347 |
| Elongation (%) | 250 | 340 | 330 |
| Hardness | 70 | 80 | 78 |
| **Air heat aging test (150 °C, 10 days)** | | | |
| Tensile strength $(kg/cm^2)$ | 220 | 280 | 250 |
| Elongation (%) | 130 | 160 | 140 |
| Hardness | 80 | 88 | 87 |
| **Flexural test** | | | |
| Number of crack occurrences | 42,000 | 52,000 | 46,000 |

## Claims

1. A friction conduction belt composed of a vulcanizate of a rubber composition comprising a) 100 parts by weight of a nitrile group-containing highly saturated rubber having an iodine number of not more than 60, and having 10 to 60 weight % nitrile monomer units, and b) 3 to 80 parts by weight of zinc methacrylate and c) an organic peroxide.

2. A friction conduction belt according to claim 1 in which the rubber Composition is prepared by adding a zinc compound and methacrylic acid to a nitrile group-containing highly saturated rubber, forming zinc methacrylate in the rubber, and then incorporating an organic peroxide.

**Patentansprüche**

1. Ein Reibungs-Antriebsriemen aus einem Vulkanisat einer Gummizusammensetzung mit a) 100 Gewichtsteilen eines eine Nitrilgruppe enthaltenden hochgesättigten Gummis mit einer Iodzahl von nicht mehr als 60 und mit 10 bis 60 Gewichts-% monomeren Nitrileinheiten, und b) 3 bis 80 Gewichtsteilen Zink-Methacrylat und c) einem organischen Peroxid.

2. Ein Reibungs-Antriebsriemen nach Anspruch 1, bei dem die Gummizusammensetzung durch Hinzufügen einer Zinkverbindung und Methacrylsäure zu einem eine Nitrilgruppe enthaltenden hochgesättigten Gummi, Ausbilden von Zink-Methacrylat in dem Gummi und dann Hinzufügen eines organischen Peroxides hergestellt wird.

**Revendications**

1. Courroie d'entraînement par frottement composée d'un produit de vulcanisation d'une composition de caoutchouc comprenant a) 100 parties en poids d'un caoutchouc hautement saturé contenant des groupes nitrile et ayant un indice d'iode inférieur ou égal à 60 et comportant de 10 à 60 % en poids d'unités monomère nitrile, et b) de 3 à 80 parties en poids de méthacrylate de zinc et c) d'un peroxyde organique.

2. Courroie d'entraînement par frottement conforme à la revendication 1 dans laquelle on prépare la composition de caoutchouc en ajoutant un composé de zinc et de l'acide méthacrylique à un caoutchouc hautement saturé contenant des groupes nitrile, formant ainsi le méthacrylate de zinc dans le caoutchouc, et en incorporant ensuite un peroxyde organique.